# EUROPÄISCHE PATENTSCHRIFT

(11) **EP 1 429 902 B1**
(45) Veröffentlichungstag und Bekanntmachung des Hinweises auf die Patenterteilung: **27.02.2008**
(21) Anmeldenummer: 02776717.7
(22) Anmeldetag: 24.09.2002
(51) Int. Cl.: B29C 43/24, B29C 43/28, B29C 70/82, B32B 27/04, F16C 33/20, F16C 33/28, B29K 27/18

(54) **VERFAHREN ZUR HERSTELLUNG VON LAGERMATERIALIEN UND VERWENDUNG DER NACH DIESEM VERFAHREN HERGESTELLTEN LAGERMATERIALIEN**
METHOD FOR THE PRODUCTION OF BEARING MATERIALS AND USE OF BEARING MATERIALS PRODUCED BY THIS METHOD
PROCEDE DE PRODUCTION DE MATERIAUX DE PALIER ET L'UTILISATION DE CES MATERIAUX DE PALIER

(30) Priorität: 26.09.2001 DE 10147303
(43) Veröffentlichungstag der Anmeldung: 23.06.2004
(73) Patentinhaber: Federal-Mogul Wiesbaden GmbH & Co.KG, 65201 Wiesbaden (DE)
(72) Erfinder: ADAM, Achim, 64569 Nauheim (DE); FUCHSBERGER, Stefan, 65343 Eltville (DE); SCHLÜTER, Joachim, 65187 Wiesbaden (DE)
(74) Vertreter: Fuchs
(86) Internationale Anmeldenummer: PCT/DE2002/003608
(87) Internationale Veröffentlichungsnummer: WO 2003/026868

(56) Entgegenhaltungen:
- EP-A- 0 684 283
- EP-A- 0 965 684
- WO-A-96/26975
- DE-A- 2 818 184
- DE-A- 4 227 909
- GB-A- 1 036 026
- GB-A- 1 401 378
- JP-A- 1 079 417
- US-A- 2 539 329
- US-A- 2 710 266
- US-A- 3 511 696
- US-A- 4 464 432
- US-A- 4 698 110
- US-A- 5 364 682
- US-A- 5 791 017

## Beschreibung

Die vorliegende Erfindung betrifft ein Verfahren zur Herstellung von Lagermaterialien mit den Merkmalen des Oberbegriffs des Patentanspruchs 1 sowie die Verwendung dieser Lagermaterialien.

Um Werkstoffe für Verbundlager, die mit einer Kunststoffgleitschicht versehen sind, herzustellen, ist es bekannt, auf einem massiven, insbesondere bandförmigen Stützgerüst, vorzugsweise aus Stahl, aus einer Kupfer- und/oder aus einer Aluminiumlegierung, eine Kunststoffgleitschicht vorzusehen, wobei diese Kunststoffgleitschicht als Basismaterial Polytetrafluorethylen (PTFE) umfasst, das ggf. mit weiteren Zusätzen, so zum Beispiel mit weiteren Polymeren, verschleiß- und/oder reibungsmindernden Zusätzen, versetzt ist. Hierbei wird dieses massive metallische Stützgerüst, das in der DE 11 32 710 AS auch als poröser Metallstreifen bezeichnet ist, mit einer Dispersion oder Paste der Gleitschicht und mit Hilfe eines hiernach angeordneten Walzenpaares gleichmäßig beaufschlagt, so dass anschließend das so beschichtete massive Stützgerüst einer thermischen Behandlung unterworfen werden kann.

Darüber hinaus ist es bekannt, an Stelle des zuvor beschriebenen Stützgerüstes ein metallisches Stützgewebe zu verwenden, das mit einer einseitig das Stützgewebe überdeckenden, überwiegend Polytetrafluorethylen enthaltend Gleitschicht versehen ist. Um dieses bekannte Stützgewebe herzustellen, wird ein Verfahren angewandt, bei dem eine Bahn des metallischen Stützgewebes kontinuierlich mit einer einseitig auf das Stützgewebe aufgelegten Folie, die das Material der Gleitschicht enthält, versehen wird. Hiernach wird bei dem bekannten Verfahren das so mit der Folie belegte Stützgewebe durch eine entsprechende Presse geführt, so dass die Folie einseitig in die Gewebestruktur des Stützgewebes eingedrückt wird.

Das zuvor beschriebene bekannte Verfahren weist jedoch den Nachteil auf, dass die hierfür benötigten Folien aus dem Gleitschichtmaterial nur relativ aufwendig hergestellt werden können, so dass die hiernach erstellten Lagermaterialien einen relativ hohen Herstellungspreis besitzen.

Aus der GB-A-1,036,026 ist ein bahnenförmiges Material bekannt, das aus einem Metallgewebe und einem Gleitschichtmaterial auf PTFE-Basis besteht. Mehrere Bahnen dieses Materials können zwischen einer Welle und einem Lager angeordnet sein.

Der vorliegenden Erfindung liegt die Aufgabe zugrunde, ein Verfahren zur Herstellung von Lagermaterialien der angegebenen Art zur Verfügung zu stellen, mit dem besonders einfach ein metallisches Stützgewebe kontinuierlich mit einer entsprechenden Gleitschicht versehen werden kann.

Diese Aufgabe wird erfindungsgemäß durch ein Verfahren mit den kennzeichnenden Merkmalen des Patentanspruchs 1 gelöst.

Das erfindungsgemäße Verfahren zur Herstellung von Lagermaterialien sieht, wie beim zuvor genannten Stand der Technik, ebenfalls vor, dass hierbei eine Bahn eines metallischen Stützgewebes kontinuierlich mit einer einseitig das Stützgewebe überdeckenden, überwiegend Polytetrafluorethylen (PTFE) enthaltenden Gleitschicht versehen wird, wobei im Unterschied zum eingangs aufgeführten Stand der Technik das Stützgewebe auf seiner Oberfläche nicht mit einer Folie sondern statt dessen mit einer Paste des Materials der Gleitschicht beschichtet wird. Hierbei wird bei dem erfindungsgemäßen Verfahren die Unterfläche des Stützgewebes während und unmittelbar nach der Beschichtung im vollflächigen Kontakt mit einer Walze geführt, derart, dass vor dem Beschichten die Paste des Materials der Gleitschicht auf die Oberfläche des Stützgewebes aufgebracht wird, während die hierzu entgegengesetzt angeordnete Fläche des Stützgewebes, die in der vorliegenden Anmeldung auch kurz als Unterfläche bezeichnet wird, während und unmittelbar nach diesem Beschichtungsvorgang im vollflächigen Kontakt mit einer Walze geführt wird, so daß in diesem Bearbeitungszustand somit die Unterfläche des Stützgewebes auf der Oberfläche der Walze anliegt. Vorzugsweise ist die Unterseite (Unterfläche) des Stützgewebes auch unmittelbar vor dem Beschichtungsvorgang vollflächig in Kontakt mit der Walze.

Das erfindungsgemäße Verfahren weist eine Reihe von Vorteilen auf. So ist zunächst festzuhalten, daß das erfindungsgemäße Verfahren, im Vergleich zu dem zuvor beschriebenen bekannten Verfahren, bei dem eine Folie, die das Material der Gleitschicht enthält, auf das metallische Stützgewebe aufgebracht wird, wesentlich preiswerter die Herstellung von Lagermaterialien erlaubt, zumal das erfindungsgemäße Verfahren ein Einstufenverfahren ist und auf die separate Herstellung einer Folie völlig verzichtet. Desweiteren ermöglicht das erfindungsgemäße Verfahren eine Vervielfachung der Variation der möglichen Materialien für die Gleitschicht, da beim bekannten Verfahren nicht aus allen möglichen Gleitschichtmaterialien auch geeignete Folien hergestellt werden können. Bedingt dadurch, daß bei dem erfindungsgemäßen Verfahren unmittelbar das pastenförmige Material der Gleitschicht direkt auf die Oberfläche des metallischen Stützgewebes aufgetragen wird, lassen sich hierbei ohne großen Aufwand nicht nur die Zusammensetzung der Gleitschicht sondern auch deren Dicke variieren, was ebenfalls beim eingangs genannten Stand der Technik nicht möglich ist. Überraschend konnte festgestellt werden, daß nur das zuvor beschriebene einseitige vollflächige Aufliegen der Unterfläche des Stützgewebes auf der Walzenoberfläche während und unmittelbar nach der Beschichtung und vorzugsweise auch zusätzlich noch vor der Beschichtung wirksam verhindert, daß sich das pastöse Material der Gleitschicht in unerwünschter Weise auf der Unterfläche des Stützgewebes ebenfalls ansammelt, wie dies bei einer direkten Beschichtung des Stützgewebes mit dem pastösen Material der Gleitschicht, d.h. ohne Vorsehung eines entsprechenden Aufliegens auf einer Walzenoberfläche, stets der Fall war. Von daher erlaubt nur die Anwendung des erfindungsgemäßen Verfahrens eine einfache und problemlose Herstellung eines ordnungsgemäßen, überwiegend einseitig mit einer Gleitschicht versehenen Stützgewebes.

Im Rahmen der vorliegenden Beschreibung umfaßt der Begriff Stützgewebe alle Konstruktionen, die sich insbesondere dadurch auszeichnen, daß zwischen der Unterfläche und der Oberfläche Aussparungen vorgesehen sind, durch die bei der Beschichtung das auf die Oberfläche aufgebrachte pastöse Material bis zur Unterfläche dringen kann.

Mit dem Begriff Beschichten werden alle Auftragsverfahren bezeichnet, mit denen eine vorgegebene und einstellbare Menge des pastösen Materials der Gleitschicht auf die Oberfläche des Stützgewebes aufgebracht werden können, so insbesondere ein Aufgießen, ein Aufstreichen und/oder ein Aufspritzen des pastösen Materials, insbesondere unter Verwendung von entsprechenden Rakel- oder Düsensystemen. Desweiteren umfaßt dieser Begriff Beschichten insbesondere auch das Aufbringen des pastösen Materials der Gleitschicht mit Hilfe von mindestens zwei Walzen, wobei eine Walze, vorzugsweise eine obere Walze, das pastöse Material der Gleitschicht auf die Oberfläche des Stützgewebes aufträgt und dort gleichzeitig über die Oberfläche und in die Aussparungen gleichmäßig verteilt, während sich eine zweite Walze, vorzugsweise eine untere Walze, in Kontakt mit der Unterfläche des Stützgewebes befindet.

Eine besonders geeignete erste Ausführungsform des erfindungsgemäßen Verfahrens sieht vor, daß hierbei zum Beschichten des Stützgewebes mit dem pastösen Material der Gleitschicht die Bahn des Stützgewebes durch den Walzenspalt eines Kalanders geführt wird, wobei der Kalander mindestens eine obere Walze und mindestens eine untere Walze aufweist.

Die Oberwalze des Kalanders kann einen kleineren Durchmesser aufweisen als die Unterwalze und/oder die Unterwalze des Kalanders kann aufgerauht sein. Der Durchmesser der Oberwalze beträgt vorzugsweise < 70% des Durchmessers der Unterwalze.

Hierbei bewirkt dieser Walzenspalt, daß einerseits eine Vergleichmäßigung und Reproduzierbarkeit des Auftrags des pastösen Materials der Gleitschicht erfolgt, während andererseits durch Variation des Liniendrucks die aufgetragene Menge des pastösen Materials und dessen Durchdringungsgrad in die Gewebezwischenräume variiert werden kann. Die hierbei vollflächig unterliegende aufgerauhte Oberfläche der unteren Walze, die sich in Kontakt mit der Unterfläche des Stützgewebes befindet, stellt sicher, daß hierbei kein Wasser an der Unterseite des Stützgewebes austritt, was zu einer ungleichmäßigen Bedeckung der Oberfläche bis hin zum Auftreten von vollständig unbeschichteten Bereichen führen würde. Da somit bei dem erfindungsgemäßen Verfahren dieser Wasseraustritt verhindert ist, findet hierbei die erwünschte, einseitige und gleichmäßige Bedeckung der Gewebestruktur durch das pastöse Material der Gleitschicht, d.h. somit die Anordnung dieses pastösen Materials überwiegend in und an der Oberfläche des Stützgewebes, statt, so daß demgemäß die Unterfläche des Stützgewebes, insbesondere in ihrem äußeren Bereich, hierbei kein pastöses Material der Gleitschicht aufweist.

Insbesondere wird der Austritt von Wasser dann minimiert, wenn als untere Walze eine solche Walze ausgewählt wird, deren zum Stützgewebe weisenden Oberfläche, d.h. somit die Oberfläche, die mit der Unterfläche des Stützgewebes unmittelbar vor und während des Beschichtens in Kontakt tritt, mit Partikeln und/oder Unebenheiten in einer Größenordnung zwischen 5 µm und 50 µm, vorzugsweise mit Partikeln und/oder Unebenheiten in einer Größenordnung zwischen 10 µm und 30 µm, versehen wird. Hierbei weist diese Oberfläche der unteren Walze die zuvor genannten Partikel bzw. Unebenheiten in einer gleichmäßigen Verteilung auf. Durch Auswahl einer derartigen unteren Walze, deren Oberfläche eine gleichmäßige, von den Partikeln bzw. Unebenheiten hervorgerufene definierte Rauhigkeit aufweist, kann besonders wirksam und reproduzierbar der zuvor beschriebene Austritt von Flüssigkeit, insbesondere von Wasser, während des Beschichtungsvorgangs verhindert werden, mit der Folge, daß bei einem derartig behandelten Stützgewebe nur die Oberfläche und maximal zusätzlich noch die Zwischenräume des Gewebes mit dem Material der Gleitschicht versehen wird bzw. werden und daß es zu einer besonders gleichmäßigen und fehlstellenfreien Oberfläche kommt.

Unter Unebenheiten werden regelmäßige oder unregelmäßige Oberflächenstrukturen verstanden, die durch eine entsprechende mechanische oder sonstige Behandlung, beispielsweise durch ein Sandstrahlen oder eine Laserstrahl-Behandlung, erzeugt werden können. Rauhe Oberflächen können auch dadurch ausgezeichnet sein, daß die Oberfläche der unteren Walze vorzugsweise mit einer entsprechenden Gravur, so insbesondere mit einer Perlgravur, versehen wird.

Eine besonders bevorzugte Weiterbildung des erfindungsgemäßen Verfahrens sieht vor, daß hierbei die Oberfläche der unteren Walze mit einer Bombage versehen ist, um so die bereits zuvor beschriebene Rauhigkeit der Oberfläche dieser unteren Walze zu erzeugen. Insbesondere wird hierfür eine Bombage aus Papier, vorzugsweise aus einem hydrophobierten Papier, aus Kunststoff oder aus Textil ausgewählt, wobei durch Auswahl der Obrflächenglätte der diesbezüglichen Bombage eine gewünschte Rauhigkeit der Oberfläche der unteren Walze eingestellt werden kann. Diese Ausführungsform des erfindungsgemäßen Verfahrens weist den zusätzlichen Vorteil auf, daß hierbei sehr schnell die Oberflächenrauhigkeit der unteren Walze variiert werden kann, da es dafür lediglich erforderlich ist, die diesbezügliche Bombage auszutauschen. Bei Verwendung von Bombagen aus Papier oder Textil ist darauf zu achten, daß hierbei die diesbezügliche Bombage, die in Kontakt mit der Unterfläche des Stützgewebes tritt, insbesondere wasserundurchlässig und/oder hydrophob ist, was beispielsweise durch entsprechende Beschichtungen oder durch Auswahl von hydrophoben Fasern, einfach und ohne Schwierigkeiten bewirkt werden kann.

Eine besonders vorteilhafte Weiterbildung der zuvor beschriebenen Ausführungsform des erfindungsgemäßen Verfahrens sieht vor, daß hierbei die untere Walze mit einer derartigen Bombage versehen wird, die aus einer Folie aus biaxial orientiertem Polyester oder aus biaxial orientiertem Polycarbonat besteht, wobei eine derartige Folie von sich aus schon die erforderliche Hydrophobie aufweist, um den unerwünschten Austritt von Wasser oder sonstiger Flüssigkeit über die Unterfläche des Stützgewebes zu verhindern. Desweiteren besitzen diese Folien noch den Vorteil, daß diese Folien neben einer ausgezeichneten Festigkeit aufgrund ihrer biaxialen Orientierung auch noch eine gute chemische Resistenz aufweisen, so daß eine entsprechende, mit einer derartigen Bombage versehene untere Walze eine hohe Stand- und Benutzungszeit besitzt.

Um bei dem erfindungsgemäßen Verfahren die zuvor beschriebene Rauhigkeit und/oder die Partikel auf der Oberfläche der unteren Walze zu erzeugen, sieht eine weitere Ausführungsform des erfindungsgemäßen Verfahrens vor, daß hierbei die entsprechende Oberfläche, die mit der Unterfläche des Stützgewebes unmittelbar vor und während der Beschichtung in Kontakt tritt, unter Ausbildung der Rauhigkeit und/oder der Partikel graviert und insbesondere sandgestrahlt wird, wobei durch die Intensität, die Auswahl der Körnung bei dem Sandstrahl und die Einwirkungszeit besonders einfach, preiswert und unproblematisch eine gewünschte Rauhigkeit der Oberfläche der weiteren Warenbahn eingestellt werden kann.

Um bei dem erfindungsgemäßen Verfahren besonders wirksam den Austritt von Pastenmaterial, Wasser oder einer sonstigen Flüssigkeit an der Unterseite des Stützgewebes während des Beschichtens zu verhindern und damit sicherzustellen, daß die Oberfläche gleichmäßig bedeckt ist und daß die Unterfläche des Stützgewebes weitestgehend nicht in Kontakt mit dem Material der Gleitschicht tritt, wird bei einer besonders bevorzugten Ausführungsform das Stützgewebe derart dem Kalander zugeführt, daß es die untere Walze, die vorzugsweise mit einer aufgerauhten Oberfläche versehen ist, teilweise umschlingt. Hierbei variiert die Umschlingungsstrecke mindestens 1 %, vorzugsweise mehr als 3 % des Umfangs der unteren Walze, wobei sich die zuvor angegebene Umschlingungsstrecke insbesondere danach richtet, mit welcher Geschwindigkeit das Stützgewebe beschichtet wird, in welcher Dicke das pastöse Gleitschichtmaterial aufgetragen wird und welche Viskosität das pastöse Material der Gleitschicht aufweist. Besonders geeignete Umschlingungsstrecken betragen 5 % bis 25 % des Umfangs der unteren Walze.

Grundsätzlich besteht bei den zuvor beschriebenen Ausführungsformen des erfindungsgemäßen Verfahrens die Möglichkeit, das Stützgewebe während des Beschichtens unter einem beliebigen Winkel dem Kalander zuzuführen, wobei zur Gewährleistung einer einwandfreien Beschichtung ein Kontakt des Stützgewebes mit der Oberwalze zu vermeiden ist. Besonders vorteilhaft ist es, wenn unmittelbar vor und während des Beschichtens das Stützgewebe nahezu horizontal zugeführt wird, wobei der Neigungswinkel so zu wählen ist, daß ein Zurückrollen der Paste vermieden wird. Ein nahezu horizontales Zuführen des Stützgewebes während des Beschichtens kann beispielsweise dadurch erreicht werden, daß der für das Beschichten verwendete Kalander eine möglichst große Unterwalze aufweist. Walzen mit unterschiedlichem Durchmesser sind bevorzugt, wobei - wie bereits erläutert - die obere Walze des Kalanders relativ zur unteren Walze des Kalanders einen kleineren Durchmesser besitzt, der vorzugsweise < 70 % des Durchmessers der unteren Walze beträgt. Durch eine derartige Wahl des Unterwalzendurchmessers des Kalanders gelingt es relativ einfach, das Stützgewebe derart dem Kalander zuzuführen, daß die Unterfläche des Stützgewebes unmittelbar vor und während des Beschichtens auf der Oberfläche der unteren Walze, insbesondere auf der aufgerauhten Oberfläche der unteren Walze, aufliegt und daß hierbei zusätzlich noch das Stützgewebe unmittelbar vor und während des Beschichtens horizontal bzw. nahezu horizontal geführt wird.

Bei einer vorteilhaften Ausgestaltung des erfindungsgemäßen Verfahrens wird dem Kalander eine dritte Walze zugeordnet, deren Achse in Transportrichtung des Stützgewebes gesehen vorzugsweise hinter dem Kalander unterhalb einer senkrecht zur Verbindungsfläche der beiden Walzenachsen durch den Walzenspalt laufenden Fläche positioniert wird, wodurch das Stützgewebe derart geführt wird, daß seine Unterseite in Kontakt mit der unteren Kalanderwalze geführt wird. Dabei kann die Umschlingungsstrecke und der Krümmungsradius der Umlenkung durch die Anordnung und Größe der dritten Walze optimiert werden. Abhängig von dem jeweiligen Material der Gleitschichtpaste kann durch eine Veränderung der Umschlingungsstrecke und durch eine Verkleinerung des Krümmungsradius der Pastenauftrag optimiert werden.

Um die zuvor angesprochene horizontale Zuführung des Stützgewebes unmittelbar vor und/oder während des Beschichtens bei gleichzeitiger Umschlingung der Unterwalze zu gewährleisten, sieht eine weitere Ausgestaltung des erfindungsgemäßen Verfahrens vor, daß hierbei die Verbindungsfläche durch die Achsen der beiden Kalanderwalzen in Richtung des Stützgewebestransportes geneigt angeordnet ist. Der Neigungswinkel beträgt vorzugsweise 5° bis 25°. Mit anderen Worten wird bei dieser Ausführungsform des erfindungsgemäßen Verfahrens nicht ein solcher Kalander verwendet, bei dem die Achsen der Walzen vertikal übereinander angeordnet sind, sondern es kommt hierbei ein Kalander zum Einsatz, bei dem die Achse der oberen Walze relativ zur Achse der unteren Walze unter einem Winkel zwischen 5° und 25° geneigt, vorzugsweise in Transportrichtung des Stützgewebes gesehen geneigt, angeordnet wird.

Wie bereits vorstehend bei den erfindungsgemäßen Verfahren mehrfach ausgeführt ist, wird bei dem erfindungsgemäßen Verfahren eine Paste des Materials, das die Gleitschicht ausbildet, einseitig auf das Stützgewebe aufgebracht. Um die Konsistenz dieser Paste auf das jeweilige Stützgewebe, das aufgrund unterschiedlicher Stützgewebekonstruktionen unterschiedlichen Dichten aufweisen kann, einzustellen, wird dem Material eine unterschiedliche Menge Flüssigkeit, so insbesondere Wasser, zugesetzt. Besonders geeignet ist es jedoch bei dem erfindungsgemäßen Verfahren, wenn als Flüssigkeit ausschließlich Wasser und kein organisches Lösungsmittel verwendet wird, wobei dem Wasser ein Netzmittel zugesetzt wird, um so die gewünschte Konsistenz der Paste einzustellen. Insbesondere wird hierfür als Netzmittel ein nicht-ionisches Netzmittel und vorzugsweise ein Netzmittel auf der Basis eines Alkylpolyglykolethers ausgewählt, wobei jedoch auch weitere Netzmittel, so insbesondere Alkylarylpolyglykolether, Alkylaminpolyglykolether, Alkylaminoxide und/oder Fettsäureester von Polyalkoholen, angewendet werden können.

Um die gewünschten Eigenschaften der auf dem Stützgewebe einseitig hergestellten Gleitschicht zu variieren, sieht eine andere Ausgestaltung des erfindungsgemäßen Verfahrens vor, daß hierbei die Paste des Gleitschichtmaterials neben Polytetrafluorethylen (PTFE) desweiteren noch mindestens ein anderes Polymer, vorzugsweise mindestens noch ein hochtemperaturbeständiges Polymer, enthält.

Vorzugsweise wird bei der zuvor beschriebenen Ausgestaltung des erfindungsgemäßen Verfahrens als hochtemperaturbeständiges Polymer ein solches Polymer verwendet, das aus der Gruppe, die vollaromatische Polyester, vollaromatische Polyamide, Polyetheretherketone und/oder Polyphenylensulfone umfaßt, ausgewählt wird.

Sollen nach dem erfindungsgemäßen Verfahren besonders belastbare und temperaturbeständige Gleitschichten einseitig auf der Oberfläche des Stützgewebes erzeugt werden, so sieht eine andere Ausführungsform des erfindungsgemäßen Verfahrens vor, daß eine solche Paste ausgewählt wird, die neben Polytetranuorethylen (PTFE) noch zwischen 20 Vol.-% und 60 Vol.-% des hochtemperaturbeständigen Polymer, insbesondere die zuvor genannten Polymere, enthält.

Weiterhin besteht bei dem erfindungsgemäßen Verfahren die Möglichkeit, daß ein Teil des Polytetrafluorethylens, vorzugsweise bis zu 50 Vol.-% des Polytetrafluorethylens (PTFE), durch andere Polymere und insbesondere durch Poly(tetrafluorethylen-co-perfluorvinylmethylether (PFA), Poly(tetrafluorethylen-co-hexafluorpropylen (FEP), Poly(hexafluorisobutylen-covinylidenfluorid)(CM-1), Poly(ethylen-alt-tetrafluorethylen (ETFE) und/oder Polyvinylidenfluorid (PVDF) ersetzt werden, wie dies eine weitere Ausgestaltung des erfindungsgemäßen Verfahrens vorschlägt.

Eine weitere Modifizierung der auf der Oberfläche des Stützgewebes einseitig angeordneten Gleitschicht kann dadurch erreicht werden, daß bei einer weiteren Ausgestaltung des erfindungsgemäßen Verfahrens eine solche Gleitschichtmaterialpaste verwendet wird, bei der bis zu 50 Vol.-% des hochtemperaturbeständigen Polymeren durch Molybdänsulfid, Wolframsulfid, Bornitrid, Graphit, Blei, Bleioxid, Eisenoxide, Calciumfluorid, Glas- und/oder Keramikpulver und/oder Glas- und/oder Kohlenstoff-Fasern ersetzt werden. Durch eine derartige Modifizierung des pastösen Materials, das auf das Stützgewebe aufgetragen wird, lassen sich in besonders einfacher und wirksamer Weise die Eigenschaften der Gleitschicht auf die jeweiligen Anforderungen einstellen, wobei es hier nur erforderlich ist, entsprechend pastöse Materialien herzustellen.

Um das bei dem erfindungsgemäßen Verfahren hergestellte Lagermaterial fertig zu stellen, sieht eine Weiterbildung des erfindungsgemäßen Verfahrens vor, dass nach dem Beschichten des Stützgewebes das beschichtete Stützgewebe, ggf. nach Vortrocknung, einer thermischen Behandlung sowie einer Walzbehandlung unterworfen wird, um so dauerhaft die Gleitschicht auf dem Stützgewebe auch zu fixieren und die Enddicke herzustellen. Ggf. kann sich hieran ein Schneidevorgang zur Dimensionierung des einseitig mit der Gleitschicht versehenen Stützgewebes anschließen, das dann zur weiteren Konfektionierung aufgewickelt wird, wobei sowohl die Beschichtung als auch die thermische Behandlung und auch die Dimensionierung bezüglich Dicke und Breite vorzugsweise kontinuierlich durchgeführt werden.

Das erfindungsgemäße Lagermaterial wird insbesondere als Gleitelement in Bundbuchsen und vorzugsweise für Fahrzeugtürscharniere verwendet, wobei neben einer hervorragenden Dauerbelastbarkeit unter Beibehaltung einer einwandfreien Funktion insbesondere auch der günstige Preis eines vo hergestellten Lagermaterials herauszuheben ist.

Alle in dieser Beschreibung verwendeten Konzentrationsangaben in Volumenprozent beziehen sich auf die fertige Gleitschicht.

Vorteilhafte Weiterbildungen des erfindungsgemäßen Verfahrens sind in den Unteransprüchen angegeben.

Das erfindungsgemäße Lagermaterial wird nachfolgend anhand der Figur 1 und das erfindungsgemäße Verfahren wird nachfolgend anhand von vier Ausführungsbeispielen, die in den Figuren 2 bis 5 schematisch gezeigt sind, näher erläutert. Es zeigen:
- Figur 1: eine schematische Schnittansicht durch ein einseitig, mit einer Gleitschicht versehenes Stützgewebe;
- Figur 2: eine schematische Darstellung einer ersten Ausführungsform des erfindungsgemäßen Verfahrens;
- Figur 3: eine schematische Darstellung einer zweiten Ausführungsform des erfindungsgemäßen Verfahrens; und
- Figur 4: eine schematische Darstellung einer dritten Ausführungsform des erfindungsgemäßen Verfahrens;
- Figur 5: eine schematische Darstellung einer vierten Ausführungsform des erfindungsgemäßen Verfahrens.

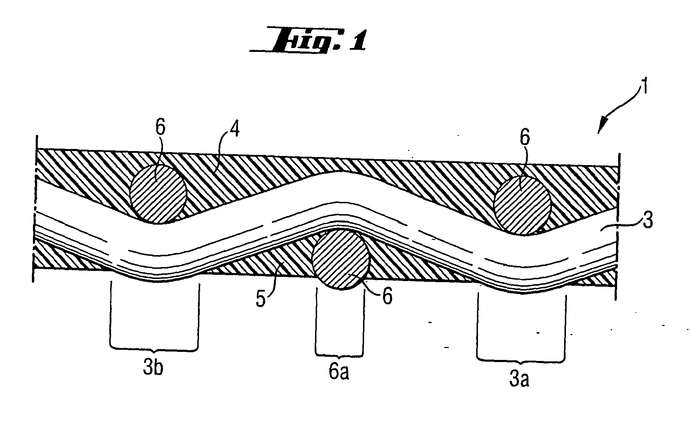

Das in Figur 1 schematisch abgebildete und insgesamt mit 1 bezeichnete Stützgewebe weist ein erstes Fadensystem 3 und ein senkrecht hierzu verlaufendes zweites Fadensystem 6 auf, wobei die Fadensysteme 6 und 3 aus Metalldrähten bestehen. Auf seiner Oberfläche ist das Stützgewebe 1 mit einer Gleitschicht 4 versehen, wobei die Gleitschicht 4, die überwiegend Polytetrafluorethylen enthält, einseitig das Stützgewebe 1 von seiner Oberfläche her überdeckt und über diese somit hinausragt. Die hierzu entgegengesetzte Unterfläche ist teilweise mit dem identischen Material der Gleitschicht 5 versehen, wobei jedoch die Gleitschicht 5 im Gegensatz zu der Gleitschicht 4 nicht die Unterfläche des Stützgewebes 1 abdeckt, so daß Teile der Fadensysteme 3a, 6a und 3b die äußere Unterfläche des Stützgewebes 1 ausbilden.

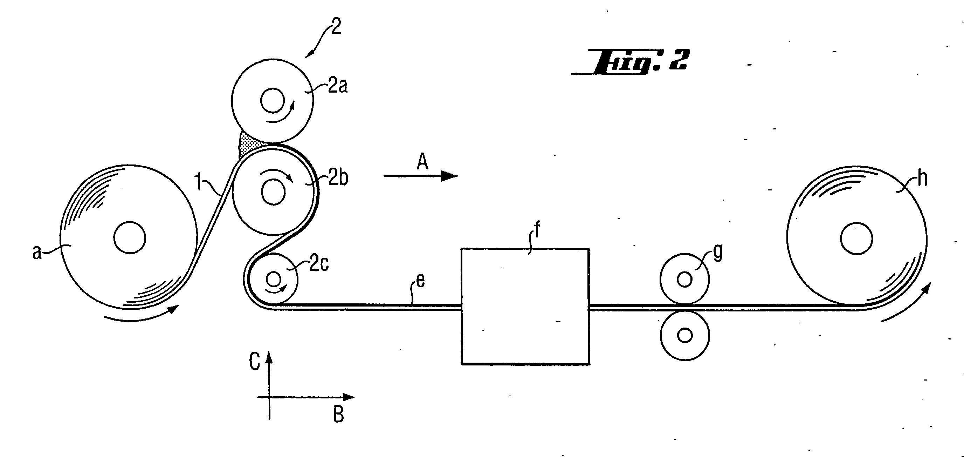

In den Figuren 2 bis 5 sind die selben Teile mit den selben Bezugszeichen versehen.

Alle in den Figuren 2 bis 5 schematisch abgebildeten Ausführungsformen des Verfahrens zur Herstellung von Lagermaterialien sehen eine Lieferrolle a für die Bahn eines metallischen Stützgewebes 1 vor, wobei die Rolle a als Abwickelrolle für das Stützgewebe 1 ausgebildet ist. In Förderrichtung des Stützgewebes 1 gesehen, die mit dem Pfeil A gekennzeichnet ist, ist jeweils ein Kalander 2 vorgesehen, dessen Walzen einen Walzenspalt ausbilden, durch das das Stützgewebe zum Beschichten geführt wird, wobei bei den gezeigten vier Ausführungsformen der Kalander 2 unterschiedlich ausgebildet ist, wie dies nachfolgend noch beschrieben wird. Hieran schließt sich in Pfeilrichtung A gesehen eine thermische Behandlungsvorrichtung f an, durch die das mit der Paste beschichtete Stützgewebe e transportiert wird. Hier hinter ist ein weiteres Walzenpaar g vorgesehen, daß das mit der Gleitschicht versehene Stützgewebe e auf eine gewünschte Dicke bringt, bevor das Gewebe auf einem Aufwickler h als beschichtetes Stützgewebe aufgewickelt wird.

Der in Figur 2 abgebildete Kalander der ersten Ausführungsform des Verfahrens, der insgesamt mit 2 bezeichnet ist, weist eine obere Walze 2a und eine hiermit einen Walzenspalt ausbildende untere, vorzugsweise aufgerauhte Walze 2b auf, wobei der unteren Walze 2b eine dritte Walze 2c zugeordnet ist, derart, daß durch Variation der Position der dritten Walze 2c, beispielsweise einer Verlagerung in Pfeilrichtung B, umgekehrt hierzu oder durch eine Verlagerung in Pfeilrichtung C bzw. umgekehrt hierzu, die Umschlingungsstrecke des Stützgewebes 1 um die Walze 2b beliebig einstellbar ist.

Um das pastöse Material der Gleitschicht bei der in Figur 2 gezeigten Ausführungsform auf das Stützgewebe 1 aufzubringen, wird das Stützgewebe 1 durch den Spalt des Kalanders 2, der durch die Walzen 2a und 2b ausgebildet wird, geführt, wobei durch Variation der zugeführten Menge an pastösen Gleitschichtmaterial, durch den Liniendruck und durch die Viskosität des pastösen Materials insbesondere der Auftragsmenge an Gleitschichtmaterial zu variieren ist.

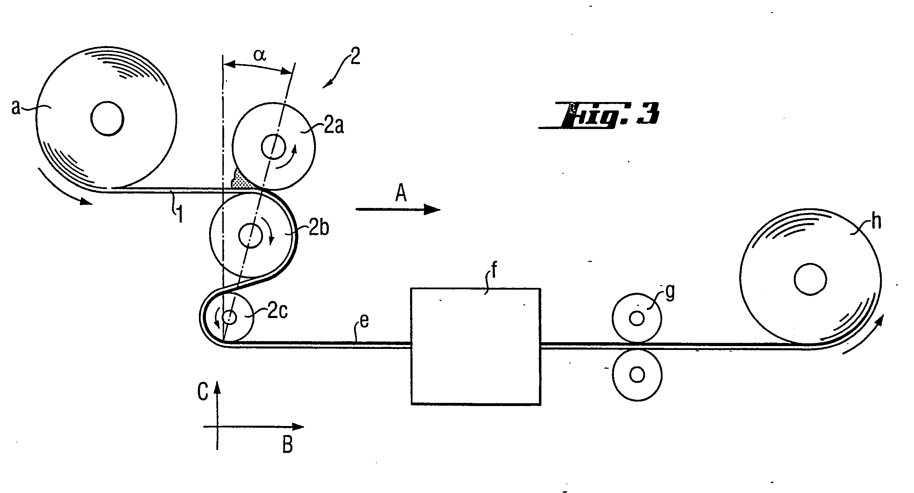

Die in Figur 3 gezeigte zweite Ausführungsform des Verfahrens unterscheidet sich grundsätzlich bezüglich des Kalanders 2 nicht von der zuvor beschriebenen Ausführungsform. Auch hierbei weist der Kalander 2 eine obere Walze 2a und eine hiermit zusammenwirkende und den Walzenspalt ausbildende untere Walze 2b auf, wobei die Oberfläche der Walze 2b vorzugsweise aufgerauht ist. Unterhalb der unteren Walze 2b ist ebenfalls eine dritte Walze 2c vorgesehen, wobei diese Walze 2c vorzugsweise in Richtung B oder in . Richtung C sowie umgekehrt zu diesen beiden Richtungen bewegbar gelagert ist, so daß durch eine entsprechende Bewegung die Umschlingungsstrecke des Stützgewebes um die Walze 2b beliebig veränderbar und auf die jeweiligen Anforderungen einstellbar ist.

Im Gegensatz zu der zuvor beschriebenen Ausführungsform sind die Walzen 2a bis 2c nicht vertikal übereinander angeordnet sondern unter einem Winkel α von etwa 15° relativ zur Vertikalen geneigt positioniert, wodurch in besonders einfacher Weise sichergestellt werden kann, daß das Stützgewebe 1 im wesentlichen horizontal dem Walzenspalt, der zwischen den Walzen 2a und 2b ausgebildet wird, zugeführt wird. Auch bei dieser Ausführungsform gemäß Figur 3 läßt sich die Umschlingungsstrecke des Stützgewebes e nach der Beschichtung um die Walze 2b durch eine Verlagerung der dritten Walze 2c in Pfeilrichtung B bzw. C und/oder umgekehrt hierzu verändern.

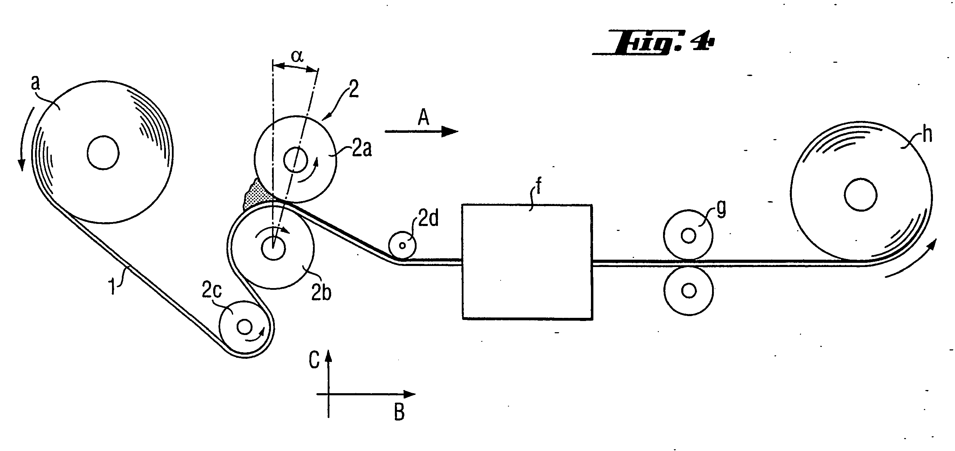

Die in Figur 4 abgebildete dritte Ausführungsform des Verfahrens weist ebenso, wie die zuvor beschriebene Ausführungsform, einen Kalander 2 auf, der eine obere Walze 2a, eine untere Walze 2b und eine hierunter noch angeordnete dritte Walze 2c aufweist. Bei dieser Ausführungsform sind die Walzen 2a und 2b ähnlich wie in Figur 3 unter einem Winkel α von etwa 15° relativ zur Vertikalen geneigt positioniert angeordnet.

Ferner weist die in Figur 4 gezeigte dritte Ausführungsform eine in Transportrichtung des Stützgewebes hinter dem Kalander 2 angeordnete vierte Walze 2d auf, wobei diese Walze 2d ebenfalls vorzugsweise in Richtung B oder in Richtung C sowie umgekehrt zu diesen beiden Richtungen bewegbar gelagert ist, so daß durch eine entsprechende Bewegung die Umschlingungsstrecke des Stützgewebes um die Walze 2b beliebig veränderbar und auf die jeweiligen Anforderungen einstellbar ist. Hierbei unterscheidet sich die in Figur 4 gezeigte Ausführungsform von der zuvor behandelten und in Figur 2 abgebildeten Ausführungsform dadurch, daß bei der Ausführungsform gemäß Figur 3 zunächst die dritte Walze 2c und hiernach erst die untere Walze 2b umschlungen wird und daß eine vierte Walze 2d vorgesehen ist, so daß durch eine Veränderung der Position einer oder beider Walzen 2c und 2d, d.h. durch eine Verlagerung in Richtung C und/oder in Richtung B, die Umschlingungsstrecke des Stützgewebes 1 um die untere Walze 2b eingestellt werden kann.

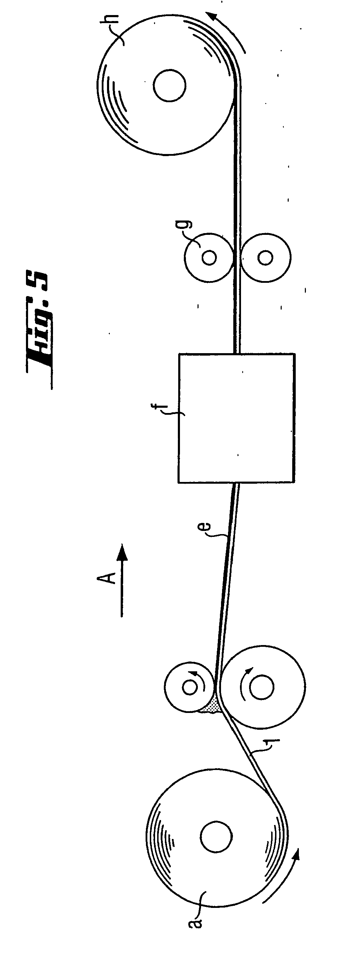

Die in Figur 5 abgebildete vierte Ausführungsform des Verfahrens sieht ebenfalls einen Kalander 2 vor, wobei jedoch dieser Kalander nur eine obere Walze 2a und eine hiermit zusammenwirkende untere, vorzugsweise aufgerauhte Walze 2b aufweist. Diese beiden Walzen 2a und 2b bilden den für die Beschichtung erforderlichen Walzenspalt aus.

Der Durchmesser der oberen Walze 2a beträgt höchstens 70% des Durchmessers der unteren Walze 2b und der Walzenspalt ist relativ zur Wickelachse der Lieferrolle a und zum Einführschlitz der thermischen Behandlungsvorrichtung f derart positioniert, daß unmittelbar vor, während und nach der Beschichtung das Stützgewebe 1 auf der entsprechend aufgerauhten Oberfläche der unteren Walze 2b aufliegt, um so die gewünschte, in Figur 1 gezeigte einseitige Beschichtung,des Stützgewebes überwiegend auf der Oberfläche zu erreichen.

Die bei dem ersten bis dritten Ausführungsbeispiel vorstehend beschriebenen und in den Figuren 2 bis 4 gezeigten Walzen 2a und 2b sowie die in der Figur 5 gezeigte Walze 2a weisen vorzugsweise einen Durchmesser zwischen 90 mm und 300 mm auf, wobei die jeweilige untere Walze 2b stets eine aufgerauhte Oberfläche besitzt.

## Patentansprüche

1. Verfahren zur Herstellung von Lagermaterialien, bei dem eine Bahn eines metallischen Stützgewebes (1) kontinuierlich mit einer einseitig das Stützgewebe überdeckenden, überwiegend Polytetrafluorethylen (PTFE) enthaltenden Gleitschicht (4) derart versehen wird, **dadurch gekennzeichnet, dass** das Stützgewebe (1) auf seiner Oberfläche mit einer Paste des Materials der Gleitschicht (4) beschichtet wird und dass das Stützgewebe während und unmittelbar nach der Beschichtung mit einer Unterfläche im vollflächigen Kontakt mit einer Walze (2a, 2b, 2c) geführt wird.

2. Verfahren nach Anspruch 1, **dadurch gekennzeichnet, dass** zum Beschichten die Bahn des Stützgewebes durch den Walzenspalt eines eine obere Walze und eine untere Walze aufweisenden Kalanders derart geführt wird, dass die Unterfläche des Stützgewebes auf der Oberfläche der unteren Walze aufliegt.

3. Verfahren nach Anspruch 2, **dadurch gekennzeichnet, dass** die Bahn des Stützgewebes durch den Walzenspalt eines Kalanders geführt wird, dessen Oberwalze einen kleineren Durchmesser als die Unterwalze aufweist und/oder dessen Unterwalze aufgeraut ist.

4. Verfahren nach Anspruch 3, **dadurch gekennzeichnet, dass** die Bahn des Stützgewebes durch den Walzenspalt eines Kalanders geführt wird, dessen Oberwalze einen Durchmesser < 70% des Durchmessers der Unterwalze aufweist.

5. Verfahren nach einem der Ansprüche 1 bis 4, **dadurch gekennzeichnet, dass** als untere Walze eine solche Walze ausgewählt wird, deren zur Unterfläche des Stützgewebes weisenden Oberfläche mit Partikeln und/oder Unebenheiten in einer Größenordnung zwischen 5 µm und 50 µm, vorzugsweise zwischen 100 µm und 30 µm, in einer gleichmäßigen Verteilung versehen wird.

6. Verfahren nach einem der vorangehenden Ansprüche, **dadurch gekennzeichnet, dass** die Oberfläche der unteren Walze mit einer Bombage aus Papier, Kunststoff und/oder Textil versehen wird.

7. Verfahren nach Anspruch 6, **dadurch gekennzeichnet, dass** als Bombage eine Folie aus biaxial orientierem Polyester oder aus biaxial orientiertem Polycarbonat ausgewählt wird.

8. Verfahren nach Anspruch 5, **dadurch gekennzeichnet, dass** die Oberfläche der unteren Walze unter Ausbildung der Partikel sandgestrahlt oder graviert wird.

9. Verfahren nach einem der vorangehenden Ansprüche, **dadurch gekennzeichnet, dass** das Stützgewebe derart dem Kalander zugeführt wird, dass es die untere Walze teilweise umschlingt, wobei die Umschlingungsstrecke mindestens 1%, vorzugsweise mehr als 3%, des Umfangs der unteren Walze ausmacht.

10. Verfahren nach einem der vorangehenden Ansprüche, **dadurch gekennzeichnet, dass** während des Beschichtens das Stützgewebe horizontal geführt wird.

11. Verfahren nach Anspruch 9 oder 10, **dadurch gekennzeichnet, dass** dem Kalander eine dritte Walze zugeordnet wird, die in Transportrichtung des Stützgewebes gesehen hinter dem Walzenspalt positioniert wird, und dass das Stützgewebe mit seiner Oberfläche in Kontakt mit der dritten Walze geführt wird.

12. Verfahren nach Anspruch 8 oder 9, **dadurch gekennzeichnet, dass** die obere Walze des Kalanders relativ zur Vertikalen unter einem Winkel von 5° bis 25° geneigt angeordnet wird.

13. Verfahren nach einem der vorangehenden Ansprüche, **dadurch gekennzeichnet, dass** die Konsistenz der Paste ausschließlich durch Zusatz eines Netzmittels eingestellt wird.

14. Verfahren nach Anspruch 13, **dadurch gekennzeichnet, dass** als Netzmittel ein nicht-ionisches Netzmittel, vorzugsweise ein Netzmittel auf Basis eines Alkylpolyglykolethers, ausgewählt wird.

15. Verfahren nach einem der vorangehenden Ansprüche, **dadurch gekennzeichnet, dass** die Paste des Gleitschichtmaterials neben Polytetrafluorethylen (PTFE) des Weiteren noch mindestens ein hochtemperaturbeständiges Polymer enthält.

16. Verfahren nach Anspruch 15, **dadurch gekennzeichnet, dass** das mindestens eine hochtemperaturbeständige Polymer aus der Gruppe, die vollaromatische Polyester, vollaromatische Polyamide, Polyetheretherketone und/oder Polyphenylensulfone umfasst, ausgewählt wird.

17. Verfahren nach Anspruch 15 oder 16, **dadurch gekennzeichnet, dass** eine solche Paste ausgewählt wird, die neben Polytetrafluorethylen (PTFE) noch zwischen 20 und 60 Vol.-% des hochtemperaturbeständigen Polymeren aufweist.

18. Verfahren nach einem der Ansprüche 15 bis 17, **dadurch gekennzeichnet, dass** bis zu 50 Vol.-% des Polytetrafluorethylens (PTFE) durch Poly(tetrafluorethylen-co-perfluorvinylmethylether (PFA), Poly(tetrafluorethylen-co-hexafluorpropylen) (FEP), Poly(hexafluorisobutylen-covinylidenfluorid)(CM-1), Poly(ethylen-alt-tetrafluorethylen) (ETFE) und/oder Polyvinylidenfluorid (PVDF) ersetzt werden.

19. Verfahren nach einem der vorangehenden Ansprüche, **dadurch gekennzeichnet, dass** eine solche Gleitschichtmaterialpaste ausgewählt wird, bei der bis zu 50 Vol.-% des hochtemperaturbeständigen Polymeren durch Molybdänsulfid, Wolframsulfid, Bornitrid, Graphit, Blei, Bleioxid, Eisenoxide, Calciumfluorid, Glas- und/oder Keramikpulver und/oder Glas- und/oder Kohlenstoff-Fasern ersetzt werden.

20. Verfahren nach einem der vorangehenden Ansprüche, **dadurch gekennzeichnet, dass** das beschichtete Stützgewebe nach seiner Beschichtung einer thermischen Behandlung unterworfen wird.

21. Verwendung des nach einem der Ansprüche 1 bis 20 hergestellten Lagermaterials als Gleitelement in Bundbuchsen, insbesondere für Fahrzeugtürscharniere.

## Claims

1. A method of producing bearing materials, in which a web of a metallic backing fabric (1) is provided continuously with an overlay (4) covering the backing fabric on one side and mainly containing polytetrafluoroethylene (PTFE), **characterized in that** the backing fabric (1) is coated on its surface with a paste of the material of the overlay (4) and **in that** the backing fabric is guided during and immediately after coating with a lower surface in all-over contact with a roll (2a, 2b, 2c).

2. A method according to claim 1, **characterized in that** for coating purposes, the web of the backing fabric is guided through the roll slit of a calendar presenting an upper roll and a lower roll so that the lower surface of the backing fabric lies against the upper surface of the lower roll.

3. A method according to claim 2, **characterized in that** the web of the backing fabric is guided through the roll slit of a calendar, the upper roll thereof having a smaller diameter than the lower roll and / or the lower roll thereof being roughened.

4. A method according to claim 3, **characterized in that** the web of the backing fabric is guided through the roll slit of a calendar, the upper roll thereof having a diameter < 70 % of the diameter of the lower roll.

5. A method according to one of the claims 1 to 4, **characterized in that** a roll is selected as a lower roll whose upper surface facing the lower surface of the backing fabric is provided with uniformly distributed particles and/or unevennesses of the order of between 5 µm and 50 µm, preferably between 100 µm and 30 µm.

6. A method according to one of the preceding claims, **characterized in that** the upper surface of the lower roll is provided with a roll cover of paper, plastics and / or textiles.

7. A method according to claim 6, **characterized in that** a film of biaxially oriented polyester or biaxially oriented polycarbonate is selected as roll cover.

8. A method according to claim 5, **characterized in that** the upper surface of the lower roll is sandblasted or graved during the generation of the particles.

9. A method according to one of the preceding claims, **characterized in that** the backing fabric is guided to the calendar so that it enlaces partially the lower roll whereby the enlacing path constitutes at least 1%, preferably more than 3 %, of the lower roll circumference.

10. A method according to one of the preceding claims, **characterized in that** the backing fabric is guided horizontally during the coating.

11. A method according to claim 9 or 10, **characterized in that** a third roll is associated to the calendar, which roll is positioned in the convey direction of the backing fabric, behind the roll slit, and **in that** the backing fabric is guided with its upper surface in contact with the third roll.

12. A method according to claim 8 or 9, **characterized in that** the upper roll of the calendar is arranged so as to be inclined relatively to the vertical at an angle between 5° and 25°.

13. A method according to one of the preceding claims, **characterized in that** the consistency of the paste is adjusted solely by the addition of a wetting agent.

14. A method according to claim 13, **characterized in that** a non-ionic wetting agent , preferably a wetting agent based on an alkyl polyglycol ether, is selected as wetting agent.

15. A method according to one of the preceding claims, **characterized in that** the paste of the material of the overlay contains, in addition to polytetrafluoroethylene (PTFE), also at least one high temperature-resistant polymer.

16. A method according to claim 15, **characterized in that** the at least one high temperature-resistant polymer is selected from the group consisting of fully aromatic polyesters, fully aromatic polyamides, polyetherether ketones and polyphenylene sulfones.

17. A method according to claim 15 or 16, **characterized in that** a paste is selected which contains, in addition to polytetrafluoroethylene (PTFE) between 20 to 60% of high temperature-resistant polymers..

18. A method according to claim 15 to 17, **characterized in that** up to 50 vol. % of the polytetrafluoroethylene (PTFE) is replaced by poly(tetrafluoroethylene-co-perfluorovinyl methyl ether) (PFA), poly(tetrafluoroethylene-co-hexafluoropropylene) (FEP), poly(hexafluoroisobutylene-covinylidene fluoride) (CM-1), poly(ethylene-alt-tetrafluoroethylene) (ETFE) and/or polyvinylidene fluoride (PVDF).

19. A method according to one of the preceding claims, **characterized in that** a paste of the material of the overlay is selected, in which up to 50 vol. % of the high temperature-resistant polymer is replaced by molybdenum sulfide, tungsten sulfide, boron nitride, graphite, lead, lead oxide, iron oxides, calcium fluoride, glass and/or ceramic powder and/or glass and/or carbon fibers.

20. A method according to one of the preceding claims, **characterized in that** the coated backing fabric is thermically treated after the coating.

21. Use of the bearing material fabricated according to one of the claims 1 to 20 as a sliding element in flanged bushings, especially for vehicle door hinges.

## Revendications

1. Procédé pour la production de matériaux de palier, dans lequel une bande de tissu métallique de support (1) est dotée de façon continue d'une couche de glissement (4), contenant principalement du polytétrafluoréthylène (PTFE) recouvrant d'un côté le tissu de support, **caractérisé en ce que** le tissu de support (1) est recouvert sur sa surface supérieure d'une pâte du matériau de la couche de glissement (4) et **en ce que** le tissu de support est guidé par un cylindre (2a, 2b, 2c) pendant et immédiatement après avoir été recouvert tout en étant en contact sur toute sa surface avec une surface inférieure.

2. Procédé selon la revendication 1, **caractérisé en ce que**, dans le but de recouvrir, la bande de tissu de support est guidée à travers la fente de cylindre d'une calandre comportant un cylindre supérieur et un cylindre inférieur, de manière à ce que la surface inférieure du tissu de support se trouve appliquée sur la surface supérieure du cylindre inférieur.

3. Procédé selon la revendication 2, **caractérisé en ce que** la bande de tissu de support est guidée à travers la fente de cylindre d'une calandre dont le cylindre supérieur présente un diamètre inférieur à celui du cylindre inférieur et /ou le cylindre inférieur est rendu rugueux.

4. Procédé selon la revendication 3, **caractérisé en ce que** la bande de tissu de support est guidée à travers une fente de cylindre dont le diamètre est < à 70 % du diamètre du cylindre inférieur.

5. Procédé selon une des revendications 1 à 4, **caractérisé en ce qu'**un cylindre dont la surface supérieure orientée vers la surface inférieure du tissu de support est dotée d'une répartition régulière de particules et /ou de rugosités d'un ordre de grandeur situé entre 5µm et 50µm , de préférence entre 100µm et 30µm a été choisi comme cylindre inférieur.

6. Procédé selon une des revendications précédentes, **caractérisé en ce que** la surface supérieure du cylindre inférieur est dotée d'un bombage en papier, en matière synthétique et /ou en matière textile.

7. Procédé selon la revendication 6, **caractérisé en ce qu'** un film en polyester orienté de façon biaxiale ou un film en polycarbonate orienté de façon biaxiale a été choisi comme bombage.

8. Procédé selon la revendication 5, **caractérisé en ce que** la surface supérieure du cylindre inférieur est sablée ou gravée pour former les particules et/ou les inégalités.

9. Procédé selon une des revendications précédentes, **caractérisé en ce que** le tissu de support est conduit vers la calandre de manière à enlacer partiellement le cylindre inférieur ; le trajet d'enlacement présentant au moins 1% , de préférence plus de 3% de la circonférence du cylindre inférieur.

10. Procédé selon une des revendications précédentes, **caractérisé en ce que** le tissu de support est guidé de façon horizontale pendant le recouvrement.

11. Procédé selon la revendication 9 ou 10, **caractérisé en ce qu'**un troisième cylindre est associé à la calandre positionnée, vu de la direction de transport du tissu de support, derrière la fente de cylindre, et **en ce que** le tissu de support est guidé avec sa surface supérieure se trouvant en contact avec le troisième cylindre.

12. Procédé selon la revendication 8 ou 9, **caractérisé en ce que** le cylindre supérieur de la calandre est disposé de façon inclinée par rapport à la verticale à un angle compris entre 5° et 25°.

13. Procédé selon une des revendications précédentes, **caractérisé en ce que** la consistance de la pate est réglée exclusivement en ajoutant un agent de surface.

14. Procédé selon la revendication 13, **caractérisé en ce qu'**un agent de surface non ionique est choisi en tant qu'agent de surface , de préférence un agent de surface à base d'un alkyle polyglycoléther.

15. Procédé selon une des revendications précédentes, **caractérisé en ce que** la pâte du matériau de couche de glissement contient avec le polytétrafluoréthylène (PTFE), en outre, au moins un polymère résistant aux températures élevées.

16. Procédé selon la revendication 15, **caractérisé en ce qu'**au moins un polymère résistant aux températures élevées est choisi parmi le groupe comportant des polyesters entièrement aromatiques, des polyamides entièrement aromatiques, des polyétheréthercétones et /ou des sulfones de polyphénylène.

17. Procédé selon la revendication 15 ou 16, **caractérisé en ce qu'**on choisi une pâte comportant à côté du polytétrafluoréthylène (PTFE), encore entre 20 et 60% en volume de polymères résistant aux températures élevées.

18. Procédé selon une des revendications 15 à 17, **caractérisé en ce que** jusqu'à 50 % en volume de polytétrafluoréthylène (PTFE) sont remplacé par poly ( tétrafluoréthylène - co - perfluorvinylméthyléther) (PFA), poly(tétrafluoréthylène-co-hexafluorpropylène) (FEP), poly (hexafluorisobtylène-fluorure de covinylidène) (CM-1), poly(éthylène-alt-tétrafluoroéthylène) (ETFE) et / ou polyfluorure de vinylidène (PVDF).

19. Procédé selon une des revendications précédentes, **caractérisé en ce** la pâte du matériau de couche de glissement est choisie de manière à ce que jusqu'à 50 % en volume des polymères résistant aux températures élevées soient remplacés par du sulfure de molybdène, du sulfure de tungstène, du nitrure de bore, du graphite, du plomb, de l'oxyde de plomb, des oxydes de fer, du fluorure de calcium , de la poudre de verre et /ou de céramique et /ou des fibres de carbone et /ou du verre.

20. Procédé selon une des revendications précédentes, **caractérisé en ce que** le tissu de support recouvert est soumis après avoir été recouvert à un traitement thermique.

21. Utilisation du matériau de palier produit selon une des revendications 1 à 20 en tant qu'élément de glissement dans des coussinets, notamment des charnières de portes de véhicules.
